# EUROPEAN PATENT APPLICATION

(11) **EP 1 598 234 A1**
(43) Date of publication of application: **23.11.2005**
(21) Application number: 04252857.0
(22) Date of filing: 17.05.2004
(51) Int. Cl.: B60K 35/00, B60R 11/02

(54) **Mounting apparatus for a display screen assembly**

(71) Applicant: Autoleads Limited, Bordon, Hampshire GU35 9QE (GB)
(72) Inventor: Mitchell, Ciaran, West Byfleet, Surrey KT14 6DT (GB)
(74) Representative: Williams, Michael Ian

(57) **Abstract**

Mounting apparatus (10) for fitting to the back of a car seat and for having an LCD screen assembly (20) mounted thereon. The apparatus (10) includes a shaft (30) that is rotatably mounted in two blocks (40). Each mounting block (40) includes a steel ball (74) and a helical spring (76) arranged such that the ball (74) is urged against the surface of a groove (32) in the shaft (30) that forms a cam surface. The cam surfaces are arranged such that the action of the ball (74) thereon tend to rotate the shaft (30) such that the LCD screen assembly (20) is urged away from a non-viewing position, but tend to resist rotation of the shaft (30) when the LCD screen assembly (20) is in a viewing position.

## Description

This invention relates to mounting apparatus for a display screen assembly and a display screen assembly including such mounting apparatus.

Some vehicles are provided with display screens for displaying information to persons travelling in those vehicles. In particular, some cars that are designed principally with the transportation of families in mind are provided with liquid crystal display (LCD) screens for the playback of video images to children travelling in those cars. This is with a view to providing such children with entertainment on car journeys. Display screens are also sometimes provided in luxury cars where the owner of such a car, or a person hiring it, may be driven in the car by another. Again, this is with a view to providing in-car entertainment or visual information services such as news broadcasts.

In providing cars with display screens, the problem of where and how these screens should be best positioned arises.

It is an object of this invention to address this problem.

According to a first aspect of this invention, there is provided mounting apparatus for a display screen assembly, the apparatus being arranged to have a display screen assembly mounted thereon and to be for fitting to a car seat, and being further arranged to be moveable between a non-viewing position in which a display screen of the assembly is concealed and a viewing position in which the display screen is exposed for viewing.

The apparatus may be arranged such that, in the non-viewing position, the screen is concealed adjacent the back of the car seat, and preferably, is concealed against the back of the car seat. The apparatus may be arranged such that, in the viewing position, the screen faces away and back from the back of the car seat.

Preferably, the apparatus is pivotable between the two positions. The apparatus may include receiving structure on which the display screen assembly is received and is mountable and mounting structure by which the apparatus can be fitted to the seat, the receiving structure being pivotable relative to the mounting structure.

The apparatus may be arranged such that at least part of a first part of the movement from the non-viewing position to the viewing position does not require work to be done by a user; and, preferably, is self-powered, meaning that power for this part of the movement is supplied by the apparatus itself. This self-powered movement may be achieved by the release of potential energy from potential energy storage means. The potential energy storage means may act between the receiving structure and the mounting structure to cause relative pivotal movement therebetween. The potential energy storage means may include at least one resiliently compressible means that, when the apparatus is in or adjacent the non-viewing position, that member exerts a force on the receiving structure to cause that structure to tend to pivot relative to the mounting structure so as to tend to move the apparatus from the non-viewing position.

The mounting structure may include a shaft that is rotatably mounted in the mounting structure for rotational movement relative thereto. The apparatus may be arranged such that the resiliently compressible means can act eccentrically on the shaft to cause the shaft to tend to rotate. The shaft may include cam structure integral therewith or fixed thereto on which the resiliently compressible means can act so as to tend to pivot the mounting structure through at least part of a first part of the movement from the non-viewing position. The cam structure may be arranged such that the resiliently compressible means tends to pivot the mounting structure through a first part only of the movement from the non-viewing position. Preferably, the cam structure is arranged such that the mounting structure is pivoted through the first 20 degrees of the movement in this way.

The cam structure may be further arranged such that the resiliently compressible means continues to exert a force thereon after the first part of the movement, but such that movement is not encouraged thereby; and, preferably, such that movement is resisted thereby. This arrangement may be such that movement in either direction is resisted thereby. The resistance may be due to friction between the cam structure and the resiliently compressible means as a result of the forces acting therebetween.

The resiliently compressible means may include at least one helical spring, one end of which abuts the mounting structure or structure mounted therein or thereon, and the other end of which abuts a cam follower that, in turn, abuts the cam structure of the shaft. The cam follower may be a ball. The mounting structure may include structure threadedly mounted therein against which the one end of the spring abuts, that structure being rotatable within the mounting structure to increase or decrease compression of the spring. The threadedly mounted structure may be a grub screw mounted in a co-operatingly threaded bore. The spring and the cam follower may also be housed in the bore.

The shaft may be arranged such that the cam structure thereof is a cam surface integrally formed from material of the shaft. At least part of the cam surface may be recessed from the surrounding surface of the shaft to provide a circumferential groove running at least part of the way around the surface of the shaft. The circumferential grove is preferably arranged to be able to accommodate at least part of the cam follower therein. In this way, the cam follower, if it is positioned in a bore in the mounting structure, can axially locate the shaft.

The mounting structure may include two mounting blocks, each arranged to receive a respective end of the shaft. Each mounting block may include a respective resiliently compressible means arranged to act on respective cam structure at the respective end of the shaft. A bush bearing may be provided in each mounting block, between each block and the shaft. The bush bearings may be of nylon.

The shaft may be hollow and may have an aperture part way therealong to give access to the interior of the shaft.

According to another aspect of this invention, there is provided a display screen assembly and mounting apparatus as defined above, the display screen assembly including a display screen mounted in a housing, and the housing being mounted on the receiving structure of the mounting apparatus.

According to a further aspect of this invention, there is provided a vehicle seat having mounting apparatus for a display screen assembly

The vehicle seat may be a car seat.

It should be understood that the word "car" as used herein is intended to have the meaning ascribed to it in common use in the United Kingdom. In other countries, such as the United States of America, the word "automobile" is sometimes used to refer to a car.

Specific embodiments of this invention are now described by way of example only and with reference to the accompanying drawings, in which:
Figure 1 is a perspective view of mounting apparatus that embodies this invention;
Figure 2 is a side elevation view of a mounting block and a shaft of the apparatus shown in Figure 1, the apparatus being arranged in a non-viewing position;
Figure 3 is a plan view and end elevation view of an end of the shaft;
Figure 4 is a diagrammatic representation of a car seat with the mounting apparatus fitted thereto, the apparatus being arranged in the non-viewing position; and
Figure 5 is the same view as Figure 4, but with the apparatus arranged in a viewing position.

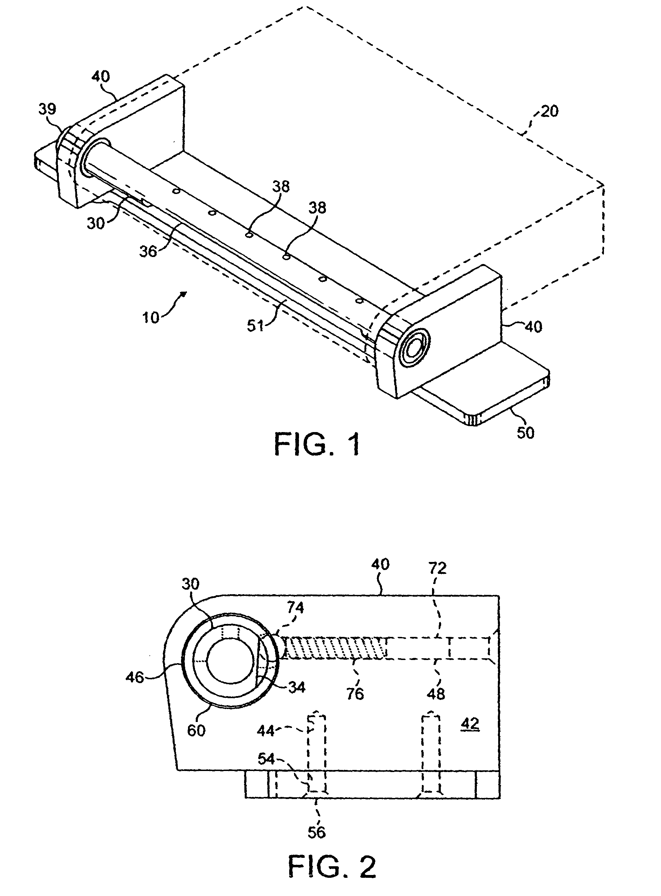

Figure 1 shows mounting apparatus 10 that is for fitting to the back of a car seat (not shown) and for having a display screen assembly in the form of an LCD screen assembly (shown in phantom 20) mounted thereon. The mounting apparatus 10 is comprised of two principal parts: receiving structure in the form of a shaft 30 and mounting structure in the form of two mounting blocks 40 and a mounting bracket 50. The general arrangement is such that the mounting blocks 40 are mounted on the mounting bracket 50, and the shaft 30 is rotatably mounted in the blocks 40, with the screen assembly 20 mounted on the shaft 30.

More specifically, the mounting bracket 50 is a generally rectangular flat aluminium plate, with an aspect ratio of about four-to-one. Although generally rectangular, the bracket 50 is shaped so as to have a shallow cut out portion 52 formed into and along one of its two long sides. The cut out portion 52 is of constant depth and does not extend all the way to the ends of the long side in which it is formed, but instead stops short thereof. The bracket 50 has a respect pair of holes (only shown in Figure 2 at 54) formed through it and positioned such that each pair is adjacent a respective one of the short sides of the bracket 50. The holes in each pair are aligned so as to be in a line that is generally parallel to the respective adjacent short side of the bracket 50.

The two mounting blocks 40 are the same as each other. Each block 40 is aluminium and shaped so as be a right rectangular block, with each having one pair of large, opposite and parallel rectangular faces 42, all other faces being smaller. With reference to Figure 2, each block 40 also has a pair of threaded holes 44 formed therein. Each pair of holes 44 is formed in one of the smaller faces of the respective block 40 so as to extend perpendicularly from that face. The spacing between holes 44 in the same block 40 is the same as between the holes 54 at each end of the bracket 50. The blocks 40 are positioned on the mounting bracket 50 such that the holes 44 of each block 40 are aligned with the holes 54 at a respective end of the bracket 50. As can be seen in Figure 1, this results in one of the large rectangular 42 faces of one block 40 being parallel and spaced from one of the large rectangular faces 42 of the other block 40. With reference to Figure 2, the blocks 40 are fixed to the bracket 50 by a respective bolt 56 though each hole 54 of the bracket and tightened into the respective, aligned, threaded, hole 44 of the block 40 aligned therewith.

With reference to Figure 1, each block 40 also has a shaft-receiving bore 46 formed therethrough. The bores 46 are formed so as to be co-axial when the blocks 40 are mounted on the bracket 50 and such that their axis is parallel to the length of the bracket 50. The bores 46 are further arranged so as to be disposed towards the end of the blocks 40 adjacent the cut out portion 52 formed in the bracket 50.

As shown in Figure 2, each block 40 also has a second, threaded, bore 48 formed therein. In each block 40, the threaded bore 48 is formed from the face of the block 40 that is furthest from the shaft-receiving bore 46 and so as to extend towards and into the shaft-receiving bore 46. Thus, the axis of the threaded bore 48 is perpendicular to that of the shaft-receiving bore 48. However, these axes do not intersect. Instead, the threaded bore is positioned such that it enters the shaft-receiving bore 48 off-centre. This is because the threaded bore 48 is positioned such that its axis is further from the mounting plate 50 that is the axis of the shaft-receiving bore 46.

Each mounting block 40 includes a nylon annular bush 60 positioned in its shaft-receiving bore 46. The bushes 60 are the same as one another and are sized so as to be a press fit in the bores 46. Each bush 60 has a hole 62 formed in its wall, the hole 62 being of slightly larger diameter than that of the threaded bores 48. The bushes 60 are orientated in the shaft receiving bores 46 such that the hole 62 in each bush 60 is approximately concentric which the threaded bore 48 that opens into the respective shaft-receiving bore 46 in which that bush 60 is positioned.

Resiliently compressible means in the form of a ball-spring-grub screw arrangement 70 is provided in each mounting block 40. In each block 40, a grub screw 72 is screwed into the threaded bore 48 so as to lie adjacent the opening of that bore 48 in the external face of the block 40. A steel ball 74 is positioned at the opening of the threaded bore 48 into the shaft-receiving bore 46, so as to be in the hole 62 in the bush and so as to extend partly into the threaded bore 48. The ball 74 is of approximately the same diameter as the threaded bore 48. A helical spring 76 is disposed between the grub screw 72 and the ball 74 and acts on each.

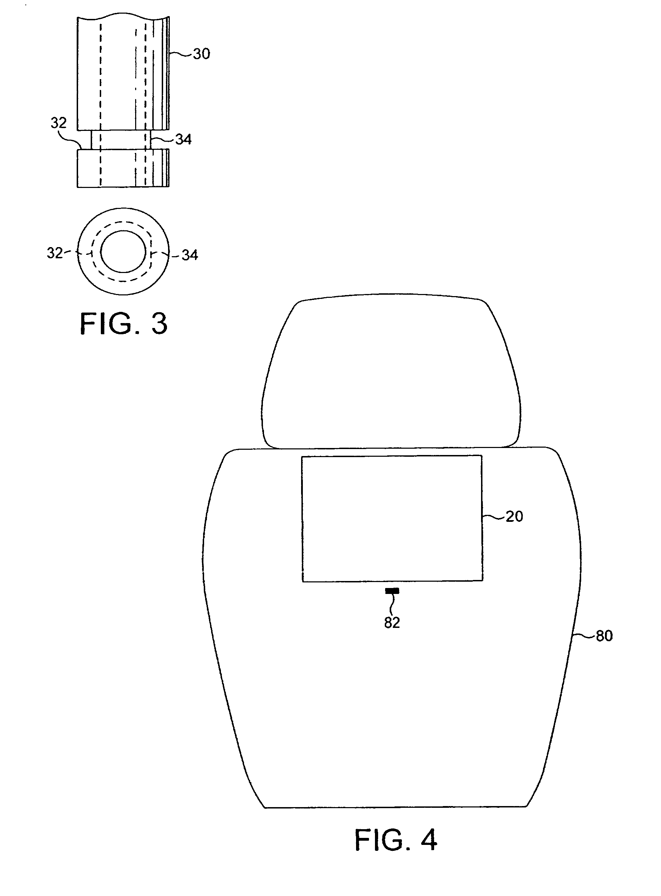

With reference to Figure 1, the shaft 30 is a hollow steel tube. The shaft 30 is mounted in the mounting blocks 40 with each end of the shaft 30 journalled in a respective one of the mounting blocks 40 for rotatably movement therein. The nylon bushes 60 act as bush bearing between the journalled ends of the shaft 30 and the mounting blocks 40. Each end of the shaft 30 has a circumferential groove 32 formed therein. For simplicity, the grooves 32 are omitted from Figure 2; however, one groove 32 in one end of the shaft 30 is shown in Figure 3, this being representative of both ends of the shaft 30. The grooves 32 are positioned such that, when the shaft 30 is mounted in the mounting blocks 40, each of the grooves 32 is aligned with a respective one of the balls 74. Each groove 32 is of width such that the respective ball 74 is urged into that groove 32 by the action of the associated spring 76.

With continued reference to Figure 3, the shaft 30 is further formed so that the surface at the base of each groove 32 has a flat portion 34. In this way, the surface at the base of each groove 32 forms a cam surface. When the shaft is orientated such that the flat portions 34 of the groove 32 are adjacent the balls 74, the arrangement is such that the balls 74 are urged against the flat surfaces by the springs 76. This orientation is referred to as the non-viewing position. The flat portions 34 are also shown in Figure 2.

With reference to Figure 1, the part of the shaft 30 between its journalled ends has part of its wall cut away to for a cut out 36 through which the inside of the shaft 30 can be accessed. The cut out 36 is formed such that it is adjacent the mounting bracket 50 when the shaft 30 is orientated in the non-viewing position. The shaft 30 is provided with a linear series of screw holes 38 formed in the wall of shaft 30 opposite the cut out 36. In this embodiment, six screw holes 38 are formed in the shaft 30.

One end 39 of the shaft extends beyond the mounting block 40 in which it is journalled and is formed into a cam (not shown).

Although only shown in phantom outline in Figure 1, it is envisage that an LCD screen assembly 20 is mounted on the shaft 30. The screen assembly 20 is provided in two halves that press-fit together to form the whole assembly 20. A front half of the screen assembly 20 has an LCD panel mounted therein and a back half of the screen assembly 20 has a linear series of six threaded holes formed therein for aligning with the six screw holes 38 in the shaft 30. The back half is mounted onto the shaft 30 by screwing screws through the screw holes 38 in the shaft and into the threaded holes in the back half of the screen assembly 20. The front half of the screen assembly is press-fitted onto the back half with electrical wires associated with the LCD panel passing through the cut out 36 of the shaft into the interior of the shaft 30 to exit the shaft 30 from one of its open ends. Thus, the LCD screen assembly 20 is mounted to the shaft 30 and, in turn, to the apparatus 10.

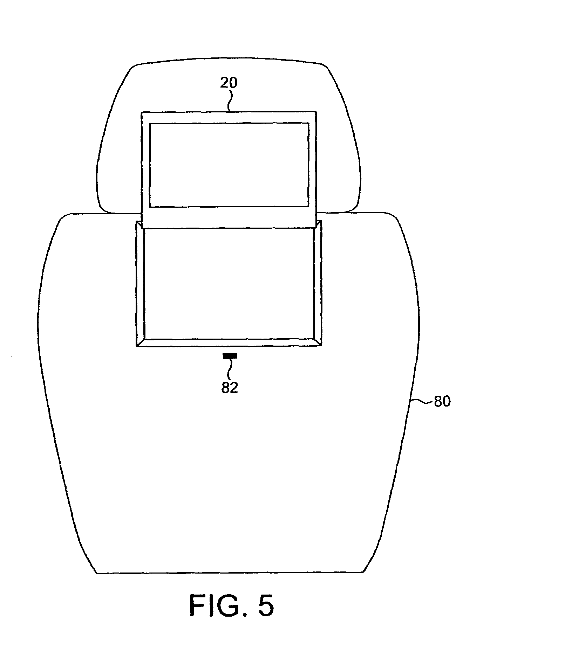

The mounting apparatus 10, with the LCD screen assembly 20 mounted thereon, is fixed to a car front seat (shown only in Figures 4 and 5 at 80) by the mounting bracket 50. It is envisaged that the mounting bracket 50 include further screw holes (not shown) therein and that the bracket 50 be fixed to the back of the car seat by screws or bolts through these holes into structure of the seat, such as a metal frame of the seat. It is further envisaged that the seat 80 include fascia that covers the parts of the mounting apparatus 10, save for the LCD display screen assembly 20.

Use of the mounting apparatus 10 will now be described. When operation of the LCD screen assembly 20 is not required, the mounting apparatus is maintained in the non-viewing position. This position is shown in Figures 2 and 4. As can be seen from Figure 2, in this position, the flat portion 34 of each groove 32 in the shaft 30 is presented to the respective ball 74. The ball 74 is, as stated above, urged against the flat portion 34 by the associated compressed spring 76 acting on the ball 74 and the respective grub screw 72. However, because, and again as stated above, the threaded bore 48 is not aligned with the centre of the shaft-receiving bore 46, but is instead offset, the ball 74 acts towards one end of the flat portion 34. The effect of this is to tend to rotate the shaft 30 relative to the mounting blocks 40 and bracket 50. With reference to Figure 4, it can be seen that the non-viewing position corresponds to the LCD screen assembly 20 being flat against the back of the seat 80. A catch mechanism 82 is provided in the seat back to catch on structure of the LCD screen assembly 20 and to hold it in the non-viewing position against the actions of the balls 74 on the flat portions 34 of the grooves 32 in the shaft 30. Thus, although there is a tendency for the shaft 30 and the LCD screen assembly 20 thereon to pivot, this is prevented by the catch mechanism 82

When the catch mechanism 82 is operated to release its hold on the LCD screen assembly 20, the tendency of the shaft 30 to rotate is no longer restrained. The balls 74, urged by the compressed springs 76, push the ends of the flat portions 34 on which they act away from the grub screws 72. This causes the shaft 30 to rotate until the flat portions 34 have moved into positions in which the balls 72 act centrally thereon. In this embodiment, this results in about 20 degrees of rotation of the shaft 30 and, hence, of the LCD screen assembly 20. The direction of rotation is such that the LCD screen assembly 20 moves away from the back of the seat 80, towards a passenger (not shown) on the rear seat of the car. This movement of the LCD screen assembly 20 is sufficient to open up a gap between an edge of that assembly 20 furthermost from the shaft 30 such that that edge can be grasped by the passenger. The passenger then pulls the LCD screen assembly further in the direction of the previous movement such that the shaft 30 continues to rotate in the same direction. In so doing, the balls 74 move off the flat portion 34 of the grooves 32 and into the curved remainder of the grooves 32. In this part of the grooves 32, the balls are still urged against the shaft 30 by the compressed spring 76, but they act through the centre of the shaft 30. Thus, there is no tendency for the shaft 30 to rotate in either direction. However, the action of the balls 74 on the shaft 30 creates friction therebetween and between the shaft 30 and the surrounding bushes 60, thereby resisting rotation of the shaft 30 in either direction. This resistance to motion is sufficient to maintain the LCD screen assembly 20 in any position in which balls 74 act on the curved part of the grooves 32. As a result, the LCD screen assembly 20 can be positioned manually by the passenger to his or her preferred position. Figure 5 shows the LCD screen assembly 20 positioned in a viewing position in which it can be viewed by the passenger.

By positioning the mounting apparatus 10 towards the top of the seat back 80, adjacent the seat headrest, the LCD screen assembly 20 can be positioned so as to be aligned with a horizon when viewed from the back seat of the car. This can prevent feelings of nausea being felt by a passenger watching the screen of the assembly 20 from the back seat.

By replying on friction between the balls 74 and the shaft 30 to maintain the LCD screen assembly 20 in a viewing position, any impact by a passenger on the assembly 20 in, for example, a crash involving the vehicle in which the assembly 20 is mounted tends to be met by compliant movement of the assembly 20 in the direction of the impact, rather than by resistance to that impact. Thus, injury to the passenger may be minimised.

In the non-viewing position, the LCD screen assembly 20 is at least partly concealed and matches the contours of the remainder of the seat. Thus, the assembly 20 tends not to attract the attention of passers-by and attempted theft of the assembly 20 may therefore be minimised.

## Claims

1. Mounting apparatus for a display screen assembly, the apparatus being arranged to have a display screen assembly mounted thereon and to be for fitting to a car seat, and being further arranged to be moveable between a non-viewing position in which a display screen of the assembly is concealed and a viewing position in which the display screen is exposed for viewing.

2. Apparatus according to claim 1, and further arranged such that, in the non-viewing position, the screen is concealed adjacent the back of the car seat, and preferably, is concealed against the back of the car seat.

3. Apparatus according to claim 1 or claim 2 and further arranged such that, in the viewing position, the screen faces away and back from the back of the car seat.

4. Apparatus according to any preceding claim and arranged to be pivotable between the two positions.

5. Apparatus according to any preceding claim and that includes receiving structure on which the display screen assembly is received and is mountable and mounting structure by which the apparatus can be fitted to the seat, the receiving structure being pivotable relative to the mounting structure.

6. Apparatus according to any preceding claim and further arranged such that at least part of a first part of the movement from the non-viewing position to the viewing position does not require work to be done by a user; and, preferably, is self-powered.

7. Apparatus according to claim 6, wherein the self-powered movement is achieved by the release of potential energy from potential energy storage means.

8. Apparatus according to claim 7, when dependent on claim 5, wherein the potential energy storage means acts between the receiving structure and the mounting structure to cause relative pivotal movement therebetween.

9. Apparatus according to claim 8, wherein the potential energy storage means includes at least one resiliently compressible means that, when the apparatus is in or adjacent the non-viewing position, that member exerts a force on the receiving structure to cause that structure to tend to pivot relative to the mounting structure so as to tend to move the apparatus from the non-viewing position.

10. Apparatus according to claim 9, wherein the mounting structure includes a shaft that is rotatably mounted in the mounting structure for rotational movement relative thereto and the apparatus is arranged such that the resiliently compressible means can act eccentrically on the shaft to cause the shaft to tend to rotate.

11. Apparatus according to claim 10, wherein the shaft includes cam structure integral therewith or fixed thereto on which the resiliently compressible means can act so as to tend to pivot the mounting structure through at least part of a first part of the movement from the non-viewing position.

12. Apparatus according to claim 11, wherein the cam structure is arranged such that the resiliently compressible means tends to pivot the mounting structure through a first part only of the movement from the non-viewing position.

13. Apparatus according to claim 11 or claim 12, wherein the cam structure is arranged such that the mounting structure is pivoted through the first 20 degrees of the movement in this way.

14. Apparatus according to any one of claims 11 to 13, wherein the cam structure is further arranged such that the resiliently compressible means continues to exert a force thereon after the first part of the movement, but such that movement is not encouraged thereby; and, instead, such that movement is resisted thereby.

15. Apparatus according to any one of claims 11 to 14, wherein the resiliently compressible means includes at least one helical spring, one end of which abuts the mounting structure or structure mounted therein or thereon, and the other end of which abuts a cam follower that, in turn, abuts the cam structure of the shaft.

16. Apparatus according to claim 15 wherein the mounting structure includes structure threadedly mounted therein against which the one end of the spring abuts, that structure being rotatable within the mounting structure to increase or decrease compression of the spring.

17. Apparatus according to claim 16, wherein the threadedly mounted structure includes a grub screw mounted in a co-operatingly threaded bore.

18. Apparatus according to any one of claims 11 to 17, wherein the cam structure includes a cam surface and at least part of the cam surface is recessed from surrounding surface of the shaft to provide a circumferential groove running at least part of the way around the surface of the shaft.

19. Apparatus according to claim 18, wherein the circumferential grove is arranged to be able to accommodate at least part of the cam follower therein.

20. Apparatus according to any one of claims 10 to 19, wherein the shaft is hollow and has an aperture part way therealong to give access to the interior of the shaft.

21. A display screen assembly, and mounting apparatus according to any one of claims 5 to 20, wherein the display screen assembly includes a display screen mounted in a housing, and the housing is mounted on the receiving structure of the mounting apparatus.

22. A vehicle seat having mounting apparatus according to any preceding claim fitted thereto.
